# FASCICULE DE BREVET EUROPEEN

(11) **EP 3 781 426 B1**
(45) Date de publication et mention de la délivrance du brevet: **18.09.2024**
(21) Numéro de dépôt: 19720803.6
(22) Date de dépôt: 19.04.2019
(51) Int. Cl.: B60K 11/08

(54) **DISPOSITIF DE TRANSFERT D'EFFORT ENTRE DES JEUX DE VOLETS NON ALIGNES**
VORRICHTUNG ZUR KRAFTÜBERTRAGUNG ZWISCHEN SÄTZEN VON NICHT AUSGERICHTETEN KLAPPEN
DEVICE FOR TRANSFERRING FORCE BETWEEN SETS OF NON-ALIGNED FLAPS

(30) Priorité: 20.04.2018 FR 1853478
(43) Date de publication de la demande: 24.02.2021
(73) Titulaire: OPmobility SE, 69007 Lyon (FR)
(72) Inventeur: UTTER, Jérôme, 01500 BETTANT (FR); MAZUE, Bertrand, 69008 LYON (FR)
(74) Mandataire: LLR
(86) Numéro de dépôt international: PCT/EP2019/060228
(87) Numéro de publication internationale: WO 2019/202146

(56) Documents cités:
- WO-A1-2015/171623
- WO-A1-2018/029655
- DE-A1- 102011 078 691
- FR-A1- 3 047 203
- FR-A1- 3 047 204
- US-A1- 2012 019 025

## Description

L'invention concerne le domaine des véhicules automobiles et plus particulièrement les dispositifs aérodynamiques actifs équipant ces véhicules.

On entend ici par dispositifs aérodynamiques actifs des dispositifs permettant de réguler les écoulements de l'air ou encore les dispositifs permettant de piloter la quantité d'air entrant ou s'écoulant autour d'un organe du véhicule. Ils sont, en règle générale, constitués d'un ou plusieurs volets pivotants. L'angle d'ouverture des volets est régulé à l'aide d'un actionneur mécanique disposé à l'extrémité des axes des volets. L'actionneur est lui-même relié à une unité de commande centralisée.

Les documents FR3047203 et DE102011078691 de l'état de la technique décrivent respectivement un dispositif aérodynamique actif pour véhicules automobiles.

Pour réduire les efforts aérodynamiques appliqués sur les axes des volets les concepteurs sont amenés à diminuer la surface des volets et par voie de conséquence à augmenter le nombre de volets. Le dispositif aérodynamique est alors constitué d'un ou plusieurs jeux de volets adjacents constitués chacun d'une pluralité de volets dont les axes sont parallèles entre eux. Toutefois, pour des raisons de coûts évidentes des moyens sont alors prévus pour ne pas multiplier le nombre d'actionneurs.

Bien souvent l'emploi d'un actionneur unique peut s'avérer suffisant, ce qui entraine la mise en oeuvre de moyens de transmission des efforts depuis l'actionneur jusqu'à chacun des volets formant le dispositif aérodynamique. Cet actionneur unique peut être disposé de façon centrale par rapport aux différents jeux de volets ou encore, pour gagner en place et en efficacité, à une des extrémités axiales d'un des jeux de volets. Ce montage excentré permet également de mieux protéger l'actionneur en cas de choc.

Une liaison mécanique est alors prévue pour transmettre le mouvement imprimé par l'actionneur à un premier jeu de volet, considéré comme jeu de volets moteur, à un jeu de volets suiveur qui lui est juxtaposé, et plusieurs jeux de volets peuvent être disposés ainsi en cascade un jeu suiveur devenant à son tour un jeu moteur pour un jeu de volets suivant. Les efforts sont alors transmis par les axes des volets eux-mêmes au travers d'un organe de transfert d'effort du jeu de volets moteur au jeu de volets suiveur.

On observe toutefois que les couples de torsion imposés aux volets entrainent des déformations de ces volets et s'ajoutent aux jeux mécaniques entre les différentes pièces constituant cette chaine de transmission. Ce qui a pour effet de provoquer des blocages, des pertes d'étanchéité et des mouvements incomplets en extrémité de ladite chaîne de transmission.

On observera ici que les efforts de l'actionneur se combinent avec les efforts aérodynamiques engendrés par l'écoulement de l'air lorsque le véhicule avance à grande vitesse.

Une première solution consiste à réduire le nombre de pièces en interaction de manière à réduire les jeux mécaniques et à rendre la transmission d'effort la plus directe possible.

L'invention a pour objet de proposer une solution complémentaire permettant de mieux répartir les efforts de transmission d'un jeu de volet à un autre, et de réduire les effets du vrillage des volets et des jeux mécaniques évoqués ci-dessus.

Le dispositif aérodynamique actif selon l'invention est destiné à équiper des véhicules automobiles. Ce dispositif comprend un cadre supportant des montants entre lesquels sont articulés en rotation, entre une position ouverte et une position fermée,

L'invention correspond au libellé de la revendication 1.

Chaque point de l'organe de transfert d'effort se déplace en translation ou en rotation dans un plan fixe qui lui est propre, chacun de ces plans formant une section de l'organe de transfert. En raison de la présence de la double liaison linéaire rectiligne entre les moyens de guidage et la glissière, l'organe de transfert d'effort est bloqué en rotation autour d'un axe quelconque appartenant à un de ces plans, ce qui permet de reprendre les efforts de torsion imposés par les axes des volets moteurs à l'organe de transfert d'effort, et de réduire les jeux susceptibles d'aboutir au blocage du dispositif.

Dans le dispositif aérodynamique actif selon l'invention la deuxième extrémité d'une biellette comprend une tête sphérique pénétrant dans un cylindre creux aménagé dans l'organe de transfert d'effort pour former une liaison linéaire annulaire. Le dispositif aérodynamique actif selon l'invention peut comprendre isolément, ou en combinaison, les caractéristiques suivantes :
- Les moyens de guidage sont formés par deux doigts circulant entre deux parois parallèles entre elles et formant la glissière.
- Les moyens de guidage sont formés par un guide unique de forme parallélépipédique.
- Les moyens de guidage sont formés par deux paires de doigts, les doigts de chacune des paires circulant de part et d'autre d'un rail unique formant la glissière.
- La hauteur et la longueur de la glissière sont adaptées de sorte que les moyens de guidage forment une liaison permanente avec ladite glissière quelle que soit la position des volets.
- Au moins un actionneur est disposé à une extrémité transversale du dispositif pour mettre en rotation au moins un volet appartenant à un premier jeu de volet moteur.
- Les pièces du dispositif aérodynamique comprenant les volets, les biellettes, le cadre, les montants, les glissières, l'organe de transfert d'effort, sont réalisées en plastique moulé.

L'invention concerne également une pièce de véhicule comportant un dispositif aérodynamique selon l'une quelconque des caractéristiques énoncées ci-dessus et en particulier lorsque cette pièce est disposée en face avant du véhicule.

L'invention sera mieux comprise à la lecture des figures annexées, qui sont fournies à titre d'exemples et ne présentent aucun caractère limitatif, dans lesquelles :
- Les figures 1 et 2 sont des vues schématiques en perspective d'un dispositif aérodynamique, selon l'invention, en position ouverte et en position fermée.
- Les figures 3 et 4 ont des vues schématiques en perspective détaillées du même dispositif aérodynamique en position ouverte et en position fermée selon un angle de vue modifié.
- La figure 5 est un schéma illustratif des liaisons mécaniques entre deux jeux de volets juxtaposés.
- Les figures 6 et 7 sont deux vues de détail de l'organe de transfert d'effort selon deux formes d'exécution équivalentes.
- Les figures 8 et 9 illustrent deux alternatives de réalisation des moyens de guidage.

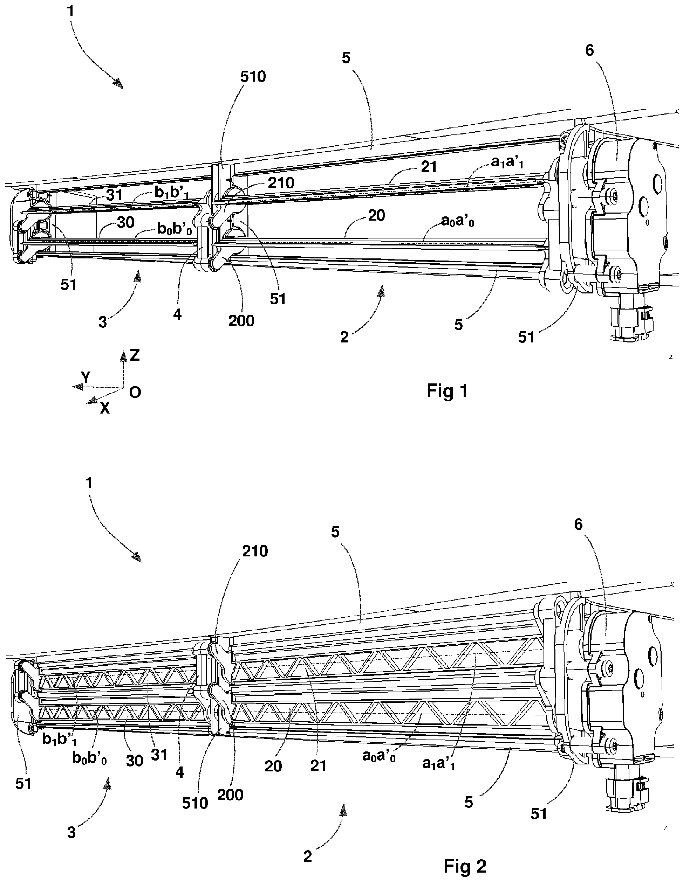

La figure 1 permet de visualiser le dispositif aérodynamique 1 dans son ensemble lorsque les volets sont en position ouverte. La figure 2 représente le même dispositif lorsque les volets sont en position fermée.

Un cadre 5 comprenant une partie supérieure et une partie inférieure reliées par des montants 51 forme la structure du dispositif aérodynamique 1. Ce cadre 5 est, par exemple, lui-même fixé, en face avant d'un véhicule en amont du radiateur de refroidissement. Le dispositif aérodynamique actif sert alors à moduler la quantité d'air entrant.

Dans ce qui suit, on utilisera un repère orthonormé OXYZ, fixe par rapport au cadre 5, déterminé de la façon suivante :
- L'axe OZ représente l'axe orienté selon la direction longitudinale du montant 51.
- L'axe OY représente l'axe transversal du dispositif.
- L'axe OX représente la direction frontale perpendiculaire au plan formé par les axes OY et OZ.

Le dispositif aérodynamique actif 1 comprend deux jeux de volets adjacents 2 et 3. Chaque jeu de volets est constitué d'une pluralité de volets 20, 21, 30, 31 articulés en rotation respectivement autour des axes a₀a'₀, a₁a'₁, b₀b'₀, b₁b'₁ formant une liaison pivot avec les montants disposés aux deux extrémités transversales des volets. Les axes des volets d'un même jeu de volets, respectivement a₀a'₀, a₁a'₁ et b₀b'₀, b₁b'₁ sont parallèles entre eux.

On entend ici par liaison pivot, une liaison ne permettant qu'une rotation autour de l'axe de la liaison. Typiquement dans le cas exposé aux figures 1 et 2 les volets peuvent se mouvoir en rotation (R_{Y}) autour d'un axe sensiblement parallèle à l'axe OY et sont bloqués en translation selon les axes OX (T_{X}), OY (T_{Y}), et OZ (T_{Z}) et en rotation selon les axes OX (R_{X}) et OZ (R_{Z}).

Le jeu de volets 2 moteur est entrainé en mouvement par un actionneur 6 est disposé à une extrémité transversale du dispositif, dans le cas d'espèce, à l'extrémité extérieure du jeu de volets 2.

Dans le dispositif aérodynamique illustré par les figures 1 et 2 chaque jeu de volets comprend deux volets. De même, les axes des volets du jeu moteur 2 sont coplanaires deux à deux avec les axes du jeu suiveur 3, et les axes des deux jeux de volets sont alignés et parallèles à l'axe OY. Comme on le verra par la suite, cette forme de réalisation n'est pas limitative.

Au niveau du montant intermédiaire 51, chaque volet supporte la première extrémité d'une biellette solidaire de l'axe de rotation du volet. La biellette 200 est portée par le volet 20 et la biellette 210 est portée par le volet 21. De même, la biellette 300 (non visible) est portée par le volet 30, et la biellette 310 (non visible) est portée par le volet 31.

La deuxième extrémité de chacune de ces biellettes forme une liaison linéaire annulaire avec un organe de transfert d'effort 4 disposé au droit du montant 51 et coulissant dans une glissière 510 alignée sur le montant 51 selon la direction OY. Les biellettes définissent avec l'organe de transfert d'effort 4 un quadrilatère parallélépipédique déformable. Les deuxièmes extrémités des biellettes peuvent être constituées par exemple d'une tête sphérique pénétrant dans un cylindre creux formé dans l'organe de transfert d'effort 4.

On entend ici par liaison linéaire annulaire une liaison qui s'oppose aux deux translations transversales ici T_{X} et Tz et qui autorise les mouvements selon les autres degrés de liberté soit, dans le cas présent, le mouvement de translation le long de l'axe OY (T_{Y}), et de rotation autour des axes OX, OY et OZ (R_{X}, R_{Y} et R_{Z}). La liaison linéaire annulaire est encore dénommée liaison sphère/cylindre.

La transmission du mouvement du jeu moteur vers le jeu suiveur s'opère par l'intermédiaire de l'organe de transfert d'effort 4. Les axes des volets du jeu moteur 2 transmettent l'effort à l'organe de transfert 4 par l'intermédiaire des biellettes 200 et 210. Et l'organe de transfert d'effort 4 transmet ce mouvement aux biellettes 300 et 310 (non représentées) pour mettre en rotation les volets du jeu suiveur 3.

L'exemple servant de support à la présente description comprend un jeu moteur et un jeu suiveur. Cette configuration n'est pas limitative et on peut très bien concevoir un dispositif aérodynamique comportant plusieurs jeux de volets en cascade, en considérant qu'un jeu suiveur devient à son tour un jeu moteur pour un jeu de volets adjacent.

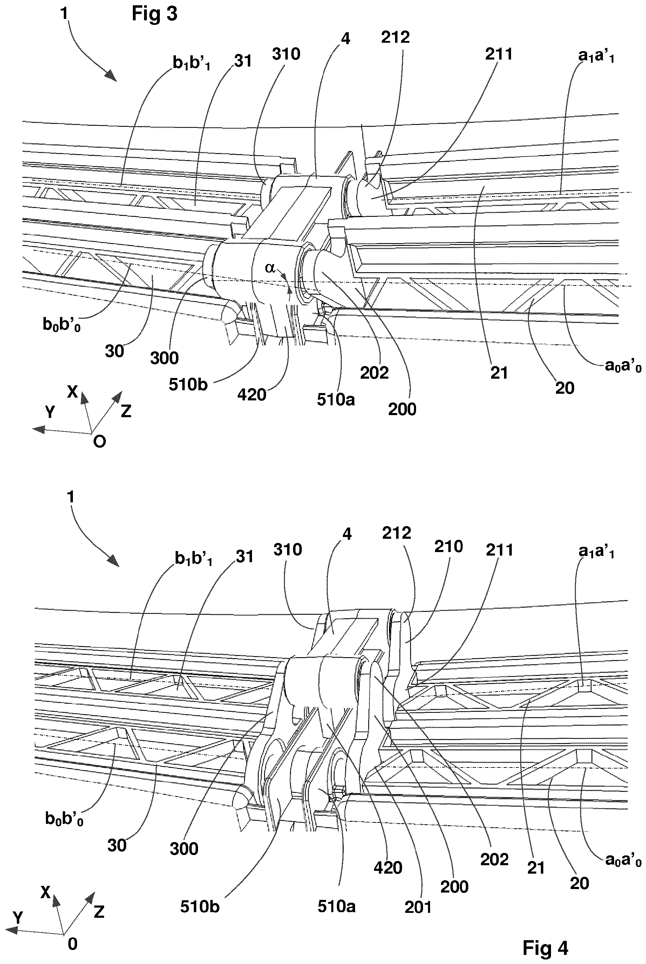

Les figures 3 et 4 représentent une vue plus détaillée de l'organe de transfert d'effort appartenant au dispositif illustré précédemment. Pour une meilleure compréhension l'angle de visualisation de la vue en perspective a été modifié.

La glissière est formée de deux cloisons 510a et 510b parallèles entre elles s'élevant depuis la base du montant 51 d'une hauteur donnée dans la direction OX. L'organe de transfert d'effort 4 comprend des moyens de guidage 42, formés ici par deux doigts 420 et 421 (non visible) espacés selon la direction OY d'une distance D donnée, coulissant dans la direction OY entre les deux cloisons 510a et 510b de la glissière 510.

Les moyens de guidage forment avec la glissière 510, par l'intermédiaire des deux doigts 420 et 421, deux liaisons linéaires rectilignes bilatérales.

On entend ici par liaison rectiligne bilatérale une liaison présentant un ensemble de points de contact alignés dont les normales sont toutes parallèles. Il existe ainsi plusieurs lignes de contact d'une des pièces qui coïncident avec les deux surfaces fixes de l'autre. Cette liaison interdit la translation perpendiculaire aux plans de contact, ici les faces 510a et 510b de la glissière avec lesquelles les doigts sont en contact, soit dans le cas présent toute translation bilatérale dans la direction OY (T_{Y}). Elle autorise la translation selon les axes OX (T_{X}) et OZ (T_{Z}).

La rotation autour de l'axe OY (R_{Y}) reste libre. La rotation autour de l'axe OZ (Rz) est bloquée par la présence des lignes de contact sur les deux faces 510a et 510b de la glissière. En théorie, la rotation autour de l'axe OX (R_{X}) reste libre. En imposant la présence de deux liaisons rectilignes bilatérales, on bloque toute rotation autour de l'axe OX (R_{X}). De la sorte, les forces de torsion s'exerçant sur l'organe de transfert d'effort 4 sont transmises aux parois des glissières 510a et 510b fixées sur le montant 51 du cadre 5.

On observera ici que les axes a₀a'₀ et a₁a'₁, des volets 20 et 21 du jeu moteur 2 restent coplanaires deux à deux, dans des plans perpendiculaires à l'axe OZ, avec les axes b₀b'₀ et b₁b' des volets 30 et 31 du jeu suiveur 3, mais forment avec ces derniers un angle non nul α. Cette configuration en V peut s'avérer nécessaire lorsque la face avant de la calandre du véhicule présente une forte courbure. Il en résulte que le plan dans lequel se déplacent les biellettes n'est plus perpendiculaire à l'axe du cylindre creux dans lequel pénètre la tête sphérique.

Dans cette configuration, la liaison de type linéaire annulaire entre la deuxième extrémité des biellettes et l'organe de transfert d'effort 4 autorise la translation de la tête sphérique à l'intérieur du cylindre le long de l'axe OY (T_{Y}), et de rotation autour des axes OX, OY et OZ (R_{X}, R_{Y} et R_{Z}) sans engendrer de blocages entre les biellettes et l'organe de transfert d'effort 4.

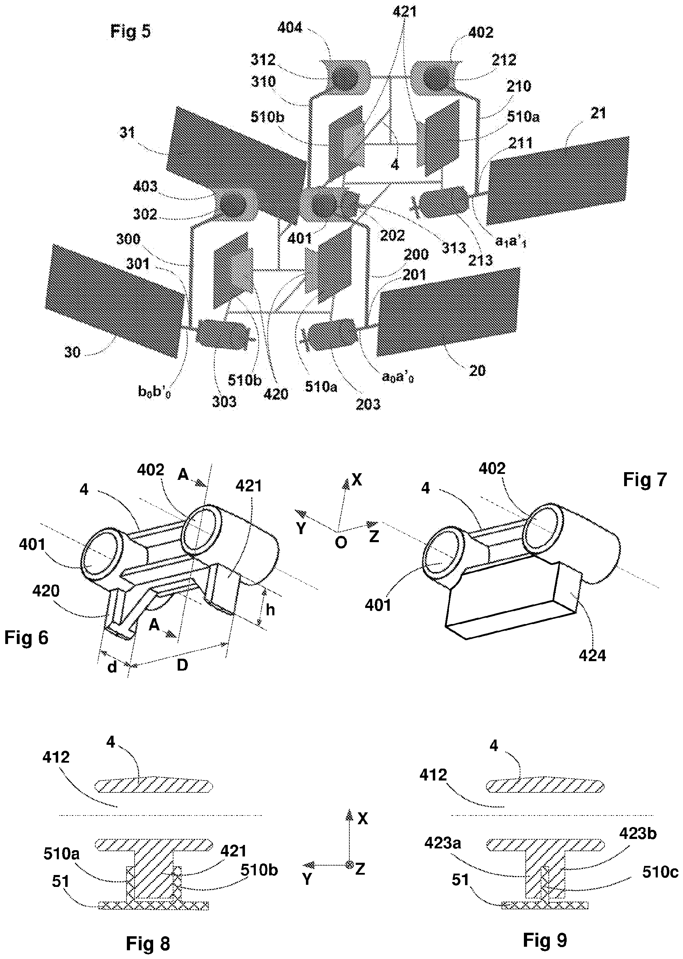

La figure 5 permet de formaliser l'ensemble des liaisons en utilisant les représentations fonctionnelles couramment utilisées en mécanique.

Les axes a₀a'₀, a₁a'₁, b₀b'₀, b₁b'₁ des quatre volets 20, 21, 22, 23, sont solidaires des premières extrémités 201, 211, 301, 311 des biellettes 200, 210, 300 et 310, et sont reliés au montant par des liaisons pivot 203, 213, 303, 313.

Les deuxièmes extrémités 202, 212, 302 et 312 des biellettes 200, 210, 300 et 310 forment des liaisons linéaires annulaires avec les cylindres creux 400, 401, 402, 403 de l'organe de transfert d'effort 4.

Les deux doigts 420 et 421 forment chacun une liaison rectiligne bilatérale avec les parois 510a et 510b de la glissière.

La figure 6 représente une vue en perspective de l'organe de transfert d'effort 4. Les cylindres creux 401 et 402 sont destinés à recevoir les deuxièmes extrémités des biellettes 20 et 21, formées par exemple par une tête sphérique, avec lesquelles ils effectuent des liaisons linéaires annulaires.

Les moyens de guidage sont ici constitués par deux doigts 420 et 421 s'étendant dans la direction OX.

Il conviendra de choisir avec discernement la largeur d et la longueur D ainsi que la hauteur h des doigts. En effet, la distance D devra être significativement supérieure à la largeur d, de manière à ce que l'organe de transfert d'effort 4 puisse s'opposer efficacement au couple exercé par les volets autour de l'axe OX. De même, la hauteur h des doigts doit être suffisante pour faire en sorte que les doigts restent engagés entre les parois de la glissière et les parois 510a et 510b de la glissière à tout instant du déplacement de l'organe de transfert, et que les lignes de contact entre les bords latéraux des doigts et les parois de la glissière puissent s'opposer efficacement aux efforts de torsion autour de l'axe OZ.

On adaptera également en conséquence la hauteur des parois 510a, 510b, ainsi que la longueur de la glissière de sorte que les moyens de guidage 42 forment une liaison permanente avec les parois, quelles que soient la position des volets et la position de l'organe de transfert d'effort.

La figure 7 illustre une forme de réalisation équivalente de l'organe de transfert d'effort 4 dans lequel les doigts sont remplacés par un guide parallélépipédique 424 de largeur d, de longueur D et de hauteur h. Les liaisons rectilignes bilatérales entre le guide parallélépipédique et les parois 510a et 510b de la glissière s'établissent par le biais des deux surfaces latérales du guide parallélépipédique 424.

La figure 8 illustre une coupe selon A-A de l'organe de transfert d'effort. On distingue le doigts 421 circulant entre les deux parois 510a et 510b.

La figure 9 illustre une alternative de réalisation dans laquelle la glissière est formée par un rail unique 510c, et dans laquelle les moyens de guidage sont formés par deux paires de doigts 422 et 423, comprenant chacun deux doigts 422a, 422b (non visibles) et 423a et 423b établissant chacun une ligne de contact avec les deux surfaces latérales du rail 510c.

### NOMENCLATURE

- 1: Dispositif aérodynamique.
- 2: Jeu de volets moteur.
- 20: Volet.
- 200: Biellette.
- 201: Première extrémité de la biellette 200.
- 202: Deuxième extrémité de la biellette 200.
- 203: Liaison pivot entre le volet 20 et le montant 51.
- 21: Volet.
- 210: Biellette.
- 211: Première extrémité de la biellette 210.
- 212: Deuxième extrémité de la biellette 210.
- 213: Liaison pivot entre le volet 21 et le montant 51.
- 3: Jeu de volets suiveur.
- 30: Volet.
- 300: Biellette.
- 301: Première extrémité de la biellette 300.
- 302: Deuxième extrémité de la biellette 300.
- 303: Liaison pivot entre le volet 30 et le montant 51.
- 31: Volet.
- 310: Biellette.
- 311: Première extrémité de la biellette 310.
- 312: Deuxième extrémité de la biellette 310.
- 313: Liaison pivot entre le volet 31 et le montant 51.
- 4: Organe de transfert d'effort.
- 401, 402, 403, 404: Liaisons linéaires annulaires entre les deuxièmes extrémités des biellettes et l'organe de transfert d'effort/Cylindres creux.
- 42: Moyens de guidage.401
- 420,421: Doigts.
- 422, 422a, 422b, 423, 423a, 423b: Paire de doigts.
- 424: Guide parallélépipédique.
- 5: Cadre.
- 51: Montants.
- 510, 510a, 510b, 510c: Glissière.
- 6: Actionneur.
- OX, OY, OZ: Axes du repère orthonormé.
- T_{X}, T_{Y}, T_{Z}: Degré de liberté en translation le long des axes OX, OY et OZ.
- R_{X}, R_{Y}, R_{Z}: Degré de liberté en rotation autour des axes OX, OY et OZ.
- a₀a'₀, a₁a'₁, b₀b'₀, b₁b'₁: Axes des volets.

## Revendications

1. Dispositif aérodynamique actif (1) destiné à équiper des véhicules automobiles comprenant un cadre (5) supportant des montants (51) entre lesquels sont articulés en rotation autour d'un axe (a₀a'₀, a₁a'₁, b₀b'₀, b₁b'₁), entre une position ouverte et une position fermée,
- au moins deux jeux de volets (2, 3) juxtaposés transversalement, les axes de rotation (a₀a'₀, a₁a'₁) d'un jeu de volets étant parallèles entre eux et coplanaires deux à deux avec les axes d'un jeu de volets adjacent (b₀b'₀, b₁b'₁) et les axes de rotation coplanaires (a₀a'₀, a₁a'₁, et b₀b'₀, b₁b'₁) de deux jeux de volets adjacents (2, 3) formant entre eux un angle (α) donné non nul,
- dans lequel
- chaque volet (20, 21, 30, 31) comprend, à au moins une de ses extrémités latérales, une biellette (200, 210, 300, 310) dont une première extrémité (201, 211, 301, 311) forme une liaison fixe coaxiale avec l'axe du volet et dont une deuxième extrémité (202, 212, 302, 312) forme une liaison linéaire annulaire avec un organe de transfert d'effort (4) pour transmettre le mouvement d'un jeu de volets moteur (2) à un jeu de volets suiveur (3) adjacent,
- ledit organe de transfert d'effort (4) comprend des moyens de guidage (42, 420, 421, 424, 423) formant, avec une glissière (510) disposée sur le montant (51) séparant les deux jeux de volets adjacents (2,3), au moins deux liaisons linéaires rectilignes bilatérales, ladite glissière (510) étant orientée de sorte que, lorsque les volets (20, 21, 30, 31) sont mis en rotation, un point quelconque de l'organe de transfert d'effort se déplace dans un plan fixe en décrivant un arc de cercle,
- **caractérisé en ce que** la deuxième extrémité (202, 212, 302, 312) d'une biellette comprend une tête sphérique pénétrant dans un cylindre creux (401, 402, 403, 404) aménagé dans l'organe de transfert d'effort (4) pour former une liaison linéaire annulaire.

2. Dispositif (1) selon la revendication 1, dans lequel les moyens de guidage (42) sont formés par deux doigts (420, 421) circulant entre deux parois (510a, 510b), parallèles entre elles et formant la glissière (510).

3. Dispositif (1) selon la revendication 1, dans lequel les moyens de guidage (42) sont formés par un guide unique de forme parallélépipédique (424).

4. Dispositif (1) selon la revendication 1, dans lequel les moyens de guidage sont formés par deux paires (422, 423) de doigts (422a, 422b, 423a, 423b), les doigts (422a, 422b, 423a, 423b) de chacune des paires (422, 423) circulant de part et d'autre d'un rail unique (510c) formant la glissière (510).

5. Dispositif (1) selon l'une quelconque des revendications précédentes, dans lequel la hauteur et la longueur de la glissière (510) sont adaptées de sorte que les moyens de guidage (42) forment une liaison permanente avec ladite glissière (510) quelle que soit la position des volets.

6. Dispositif (1) selon l'une quelconque des revendications précédentes, dans lequel au moins un actionneur (6) est disposé à une extrémité transversale du dispositif pour mettre en rotation au moins un volet appartenant à un premier jeu de volets moteur (2).

7. Dispositif (1) selon l'une quelconque des revendications précédentes, dans lequel les pièces du dispositif aérodynamique comprenant les volets (20, 21, 30, 31), les biellettes 200, 210, 300, 310), le cadre (5), les montants (51), les glissières (510), l'organe de transfert d'effort (4), sont réalisées en plastique moulé.

8. Pièce de véhicule comportant un dispositif aérodynamique (1) selon l'une quelconque des revendications précédentes.

9. Pièce de véhicule selon la revendication 8, disposée en face avant du véhicule.

## Patentansprüche

1. Aktive aerodynamische Vorrichtung (1) zum Ausstatten von Kraftfahrzeugen mit einem Rahmen (5), der Stützen (51) trägt, zwischen denen eine Drehbewegung um eine Achse (a₀a'₀, a₁a'₁, b₀b'₀, b₁b'₁) zwischen einer offenen und einer geschlossenen Position möglich ist,
- mindestens zwei quer nebeneinander liegenden Klappensätze (2, 3), wobei die Drehachsen (a₀a'₀, a₁a'₁) eines Klappensatzes parallel zueinander und paarweise koplanar mit den Achsen eines benachbarten Klappensatzes (b₀b'₀, b₁b'₁) sind und die koplanaren Drehachsen (a₀a'₀, a₁a'₁ und b₀b'₀, b₁b'₁) von zwei benachbarten Klappensätzen (2, 3) zwischen sich einen gegebenen Winkel (α) ungleich Null bilden,
- wobei
- jede Klappe (20, 21, 30, 31) an mindestens einem ihrer seitlichen Enden einen Schwingarm (200, 210, 300, 310) aufweist, dessen erstes Ende (201, 211, 301, 311) eine feste Verbindung bildet, die koaxial zur Achse der Klappe ist und dessen zweites Ende (202, 212, 302, 312) eine ringförmige lineare Verbindung mit einem Kraftübertragungselement (4) bildet, um die Bewegung eines Satzes von Antriebsklappen (2) auf einen benachbarten Satz von Folgeklappen (3) zu übertragen,
- das Kraftübertragungselement (4) Führungsmittel (42, 420, 421, 424, 423) aufweist, die mit einer Gleitschiene (510), die an dem die beiden benachbarten Klappensätze (2, 3) trennenden Stützen (51) angeordnet ist, mindestens zwei zweiseitige geradlinige lineare Verbindungen bilden, wobei die Gleitschiene (510) so ausgerichtet ist, dass, wenn die Klappen (20, 21, 30, 31) in Drehung versetzt werden, ein beliebiger Punkt des Kraftübertragungselements sich in einer festen Ebene bewegt, indem er einen Kreisbogen beschreibt,
- **dadurch gekennzeichnet, dass** das zweite Ende (202, 212, 302, 312) eines Schwingarms einen kugelförmigen Kopf aufweist, der in einen Hohlzylinder (401, 402, 403, 404) eindringt, der in dem Kraftübertragungselement (4) angeordnet ist, um eine ringförmige lineare Verbindung zu bilden.

2. Vorrichtung (1) nach Anspruch 1, bei der die Führungsmittel (42) durch zwei Finger (420, 421) gebildet werden, die zwischen zwei Wänden (510a, 510b) zirkulieren, die parallel zueinander sind und die Gleitschiene (510) bilden.

3. Vorrichtung (1) nach Anspruch 1, bei der die Führungsmittel (42) durch eine einzelne, quaderförmige Führung (424) gebildet werden.

4. Vorrichtung (1) nach Anspruch 1, bei der die Führungsmittel durch zwei Paare (422, 423) von Fingern (422a, 422b, 423a, 423b) gebildet werden, wobei die Finger (422a, 422b, 423a, 423b) jedes der Paare (422, 423) auf beiden Seiten einer einzigen Schiene (510c) umlaufen, die die Gleitschiene (510) bildet.

5. Vorrichtung (1) nach einem der vorhergehenden Ansprüche, bei der die Höhe und die Länge der Gleitschiene (510) so angepasst sind, dass die Führungsmittel (42) unabhängig von der Position der Klappen eine dauerhafte Verbindung mit der Gleitschiene (510) bilden.

6. Vorrichtung (1) nach einem der vorhergehenden Ansprüche, wobei mindestens ein Stellglied (6) an einem Querende der Vorrichtung angeordnet ist, um mindestens eine Klappe, die zu einem ersten Satz von Motorklappen (2) gehört, in Drehung zu versetzen.

7. Vorrichtung (1) nach einem der vorhergehenden Ansprüche, wobei die Teile der aerodynamischen Vorrichtung, die die Klappen (20, 21, 30, 31), die Schwingarme (200, 210, 300, 310), den Rahmen (5), die Stützen (51), die Gleitschienen (510) und das Kraftübertragungsorgan (4) aufweisen, aus geformtem Kunststoff hergestellt sind.

8. Fahrzeugteil mit einer aerodynamischen Vorrichtung (1) nach einem der vorhergehenden Ansprüche.

9. Fahrzeugteil nach Anspruch 8, das an der Vorderseite des Fahrzeugs angeordnet ist.

## Claims

1. An active aerodynamic device (1) configured to equip motor vehicles, comprising a frame (5) supporting uprights (51) between which are articulated in rotation about an axis (a₀a'₀, a₁a'₁, b₀b'₀, b₁b'₁), between an open position and a closed position,
- at least two sets of flaps (2, 3) that are transversely juxtaposed, the axes of rotation (a₀a'₀, a₁a'₁) of one of the sets of flaps being parallel to each other and coplanar in pairs with the axes of an adjacent set of flaps (b₀b'₀, b₁b'₁) and the coplanar axes of rotation (a₀a'₀, a₁a'₁ and b₀b'₀, b₁b'₁) of two adjacent sets of flaps (2, 3) forming a given non-zero angle (α) between them,
wherein,
- each flap (20, 21, 30, 31) comprises, at at least one of its lateral ends, a connecting rod (200, 210, 300, 310) , a first end (201, 211, 301, 311) of which forms a fixed connection coaxial with the axis of the flap and a second end (202, 212, 302, 312) of which forms an annular linear connection with a force transfer member (4) for transmitting the movement of a set of driving flaps (2) to an adjacent set of follower flaps (3),
- said force transfer member (4) comprises guide means (42, 420, 421, 424, 423) forming, with a slide (510) arranged on the upright (51) separating the two adjacent sets of flaps (2, 3), at least two bilateral rectilinear linear connections, said slideway (510) being oriented so that, when the flaps (20, 21, 30, 31) are rotated, any point on the force transfer member (4) moves in a fixed plane, describing an arc of a circle,
- **characterized in that** the second end (202, 212, 302, 312) of a connecting rod (200, 210, 300, 310) comprises a spherical head penetrating into a hollow cylinder (401, 402, 403, 404) provided in the force transfer member (4) to form an annular linear connection.

2. The device (1) according to claim 1, wherein the guide means (42) are formed by two fingers (420, 421) running between two walls (510a, 510b) parallel to each other and forming the slide (510).

3. The device (1) according to claim 1, wherein the guide means (42) are formed by a single parallelepiped guide (424).

4. The device (1) according to claim 1, wherein the guide means are formed by two pairs (422, 423) of fingers (422a, 422b, 423a, 423b), the fingers (422a, 422b, 423a, 423b) of each of the pairs (422, 423) running on either side of a single rail (510c) forming the slide (510).

5. The device (1) according to any one of the preceding claims, wherein the height and length of the slide (510) are adapted so that the guide means (42) form a permanent connection with said slide (510) whatever the position of the flaps.

6. The device (1) according to any one of the preceding claims, wherein at least one actuator (6) is arranged at a transverse end of the device (1) to rotate at least one flap belonging to a first set of driving flaps (2).

7. The device (1) according to any one of the preceding claims, wherein the parts of the aerodynamic device (1) comprising the flaps (20, 21, 30, 31), the connecting rods (200, 210, 300, 310), the frame (5), the uprights (51), the slides (510) and the force transfer member (4) are made of molded plastic.

8. A vehicle component comprising an aerodynamic device (1) according to any one of the preceding claims.

9. The vehicle component according to claim 8, arranged on a front face of the vehicle.
